# EUROPEAN PATENT APPLICATION

(11) **EP 1 227 512 A2**
(43) Date of publication of application: **31.07.2002**
(21) Application number: 02250491.4
(22) Date of filing: 24.01.2002
(51) Int. Cl.: H01K 1/34, H01K 1/50, H01K 1/32

(54) **High pressure halogen filament lamp**

(30) Priority: 24.01.2001 US 769038
(71) Applicant: GENERAL ELECTRIC COMPANY, Schenectady, NY 12345 (US)
(72) Inventor: Bigio, Laurence, Ohio 444118 (US); Lieszkovszky, Laszlo Viktor, Ohio 44124 (US); Berki, Robert J., Lorain, Ohio 44112 (US)
(74) Representative: Pedder, James Cuthbert

(57) **Abstract**

The lamp according to the invention (10) has a filament tube (14) attached to a base (12), and an outer envelope (22) encompassing the filament tube (14). Reductions to the gas fill pressures of the outer envelope (22) and filament tube (14) increase the probability that the coated outer envelope (22) will contain the fragments of the filament tube (14) in cases involving explosive failure of the filament tube(14).

## Description

The invention relates to an improvement in high pressure halogen lamps, more specifically halogen A-line lamps incorporating a pressurized glass filament tube contained in an outer envelope.

A halogen A-line lamp has a pressurized filament tube inside an outer envelope. It is important for safety that any explosion of the filament tube is contained by the outer envelope. To accomplish this, some lamps have used a thick glass outer envelope at least 3.55 mm (0.14 inches) thick. By placing a silicone coating on the exterior of the outer envelope, it is possible to use standard thin walled glass outer envelopes, which are about 0.5 mm (0.02 inches) thick. The use of standard thin walled glass envelopes saves considerable expense.

While lamps with silicone coated outer envelopes have been manufactured, over time the silicone coating degrades. The rate of degradation increases when the coating is subjected to higher operating temperatures. Reduction of temperature can be achieved by reducing power supplied to the bulb, but reduction in power often is undesirable because it reduces light output.

It would be advantageous, therefore, to provide a lamp that reduces the operating temperature of the outer envelope, thus extending the life of the silicone coating, without reducing the power supplied to the filament tube. In addition, it would be advantageous to provide a lamp having a standard thin walled outer envelope that is better able to withstand explosive failure of the filament tube.

Generally, the invention provides for a lamp which comprises a base, a filament tube, and an outer envelope encompassing the filament tube. The filament tube comprises a filament tube gas fill and a filament electrically connected to the base. The outer envelope has a gas fill. At about 20°C the outer envelope gas fill is less than about 500 torr.

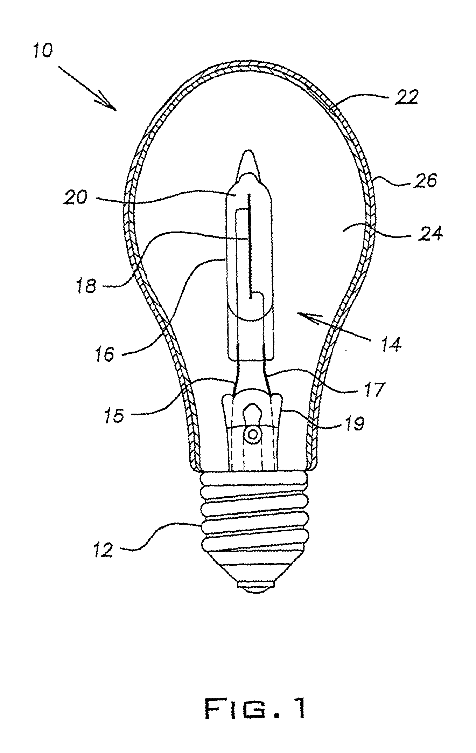

The invention will now be described in greater detail, by way of example, with reference to the drawings, in which:-
Fig. 1 is an elevational view partially in section of a lamp according to the invention.

In the description that follows and in the clauses, when a preferred range, such as 5 to 25, is given, this means preferably at least 5, and separately and independently, preferably not more than 25.

The present invention generally relates to halogen lamps, and more particularly to halogen lamps having a high-pressure inner filament tube and an outer envelope. The illustrated embodiment shows a halogen lamp with a glass filament tube and outer envelope, but other types of containment vessels are within the scope of the present invention.

Referring to Fig. 1, the illustrated lamp 10 has a metal base 12 suitable for insertion into a source of electrical energy such as a standard lamp socket. The metal base receives electrical energy from the socket and transmits it to the filament tube 14. The filament tube 14 may be formed from glass and has walls 16, typically about 0.6 to 1.0 mm thick. Two metal wires 15 and 17 embedded in the glass convey electrical current from the base to the filament 18, also contained within the filament tube. The filament 18 is typically made of tungsten and incandesces when current is passed through it. A filament tube gas fill 20 is sealed in the filament tube. The filament tube is a high-pressure filament tube, containing a filament tube gas fill at a pressure of at least 900 torr measured at about 20°C.

The composition of the filament tube gas fill is typically about 90-99% xenon or other noble gas and 1-10% nitrogen. The fill typically also contains about 0.05% of a halogen source, for example, methyl bromide, and traces of oxygen. The filament tube is typically rated to consume 40-300 watts, more preferably 60-100 watts if used in direct lighting applications. Both the filament tube and composition of the filament tube gas fill are well known in the art.

The outer envelope 22 of the lamp is a standard A-line or GLS (general lighting service) envelope known to the art, made of glass with a thickness of approximately 0.4 to 0.6 mm, preferably 0.5 mm (0.02 inches). The outer envelope is attached to the base and encompasses the filament tube as shown in Fig. 1. The outer envelope typically contains an outer envelope gas fill 24 of an inert gas such as argon or nitrogen. Helium, neon, krypton or xenon could also be used. Preferably the outer envelope gas fill measured at about 20°C is at a sub-atmospheric pressure. This pressure is preferably 3-500 torr, more preferably 100-400 torr, more preferably 200-300 torr, more preferably about 250 torr.

The outer envelope 22 also may have a coating, typically a polymeric coating, preferably a rubber coating, more preferably a silicone rubber coating. This coating is typically on the exterior surface of the outer envelope, and may be applied by dipping the bulb in a bath of the liquid rubber. The coating preferably covers substantially all of the exterior of the outer envelope, as shown in Fig. 1. Suitable silicone rubbers are available from Rhodia Silicones North America or from Nusil Technology. A preferred coating silicone rubber is a two-part addition cure high molecular weight high-tear strength silicone rubber, available from Nusil under the designation MED-10-6640. While silicone rubbers are preferred, the coating may also be a long-chain halogenated polymer such as polytetrafluoroethylene, commonly known as PTFE. Furthermore, while a single layer of coating may be used, a greater degree of containment can be realized by using multiple layers of coating. This can be achieved by dipping the outer envelope multiple times into a bath of coating material. For example, two, three or four dips may be more desirable to obtain increased containment. A typical coating thickness is about 0.01 inches.

A further aspect of the invention concerns the pressure of the filament tube gas fill in the filament tube. The high pressure gas in the filament tube provides the explosive force in cases of explosive failure. Typical filament tubes known in the art contain a gas fill at a pressure of about 4700 torr measured at about 20°C.

Maintaining an elevated pressure in the filament tube is desirable to maintain efficiency of lighting and to reduce or eliminate blackening of the inner surface of the tube. Blackening of the filament tube occurs when filament material vaporizes and condenses on the tube's inner surface. High pressure inside the filament tube retards vaporization and helps ensure that light passes unhindered out of the filament tube. Nevertheless, a degree of pressure reduction inside the filament tube can reduce the force of explosion without excessively sacrificing efficiency or promoting blackening of the filament tube's inner surface. Preferably the pressure inside the filament tube at about 20°C is reduced to 1500-4100 torr, more preferably 1900-3500 torr, more preferably 2300-3100 torr, more preferably 2500-2900 torr, more preferably about 2700 torr.

Reducing the pressure of the filament tube gas fill 20 increases the likelihood that the outer envelope will contain the fragments of the filament tube in cases of explosive failure. When the filament tube explodes, pieces of the filament tube material, typically glass, are propelled outward by the high pressure filament tube gas fill. Reducing this pressure reduces the force of filament tube fragments as they strike the interior of the outer envelope, reducing the likelihood that any individual fragment will break through and escape the outer envelope.

Use of a coating on the outer envelope also increases the ability of the outer envelope to contain the filament tube in cases of explosive failure. A coating, especially a multi-layer coating, reduces the likelihood that the outer envelope will shatter when struck from inside by fragments of the filament tube. Even if a glass outer envelope is cracked in many places, the outer coating can hold the pieces together and in place.

Finally, reduction of the outer envelope gas fill pressure increases the ability of the outer envelope to contain explosive failure of the filament tube. When the filament tube fails, the high pressure filament tube gas fill expands and mixes with the outer envelope gas fill. As a result, the internal pressure exerted on the outer envelope increases. By reducing the initial pressure of the outer envelope gas fill, the resulting pressure inside the outer envelope when the filament tube ruptures is also reduced. If the pressure in the outer envelope is kept at below or near atmospheric pressure, then the outer envelope is less likely to fail and release pieces of glass into the environment.

Reducing the outer envelope gas fill pressure also reduces the likelihood of outer envelope failure in a second way. Even though the outer envelope will likely crack as it is struck from inside by fragments of the filament tube, if the overall pressure within the outer envelope remains below atmospheric pressure, then a breach of the outer envelope and coating will allow external air to rush into the outer envelope. The influx of air will act to counter the force of the fragment as it strikes the interior of the outer envelope.

While reducing the pressure in the outer envelope to a near vacuum reduces the likelihood of outer envelope failure, test data has shown that outer envelope failure is least likely when a low pressure outer envelope gas fill such as 250 torr at about 20°C is present in the outer envelope. The presence of some gas at a low pressure may act to slow the fragments of the filament tube in cases of failure.

Another benefit of reducing the pressure of the outer envelope gas fill is a reduced temperature of the outer envelope. When the outer envelope experiences higher operating temperatures, coatings are more likely to prematurely fail, becoming embrittled and in some cases flaking off of the outer envelope before failure of the filament tube. Loss of coating greatly increases the likelihood that the outer envelope will fail to contain an explosion of the filament tube. A reduced outer envelope gas fill pressure results in a lower rate of heat transfer from the filament tube to the outer envelope, reducing the operating temperature of the outer envelope and its coating. Reducing the outer envelope gas fill pressure and therefore the outer envelope operating temperature thus extends the service life of the coating.

As discussed above, in various aspects of the invention the lamp may have an outer envelope gas fill at subatmospheric pressure, a coating on the exterior of the outer envelope, and a filament tube gas fill of (compared to standard) reduced pressure. These elements act to improve containment of glass fragments when the inner filament tube explosively fails.

### EXAMPLE

To assess the performance of lamps according to the invention, standard halogen A-line lamps and various embodiments were subjected to a containment failure test. Three different combinations of filament tube pressure (the pressure of the filament tube gas fill measured at about 20°C) and outer envelope gas fill (measured at about 20°C) were tested against each other to determine the likelihood of containment at a variety of operating temperatures. As discussed above, higher temperatures create greater pressures in the lamp and increase the likelihood that the outer envelope will fail to contain glass shards when the filament tube explodes. The combinations were: (1) 4500 torr filament tube gas fill pressure and 600 torr outer envelope gas fill pressure (a standard lamp), (2) 2700 torr filament tube gas fill pressure and 600 torr outer envelope gas fill pressure, and (3) 2700 torr filament tube gas fill pressure and 250 torr outer envelope gas fill pressure. As noted above, these pressures are reported at about 20°C, as pressures naturally rise during operation of the lamp. Each lamp tested had a three-layer Nusil silicone rubber coating on its outer envelope.

The lamps were burned in a horizontal position, and the temperature at the equator of the outer envelope was measured using a thermocouple. Once the temperature stabilized, the lamp was subjected to a 480 volt power surge. The power surge caused full arc failure of the filament, leading to a temperature and pressure spike that ruptured the filament tube in each case. This method of testing was undertaken to guarantee filament tube rupture and to simulate the most severe type of lamp failure, as normally a fuse would cut power and limit the arc size before full arc failure could develop.

After the filament tube ruptured, the ability of the outer envelope to contain the glass shards was observed. The outer envelope was considered to have failed (non-containment) if any glass was observed to have escaped the outer envelope. Regression analysis of the data yielded a curve plotting probability of non-containment against measured temperature. Using the data obtained, a fourth curve was interpolated to represent the results of combining a 4500 torr filament tube pressure with a 250 torr outer envelope pressure.

The lower probabilities of non-containment are most important, as it is desirable from a safety standpoint to eliminate the possibility of filament failure leading to a spray of broken glass. The temperatures at which each pressure combination yielded greater than 0.1, 1.0, and 10.0 percent chance of failure are listed in the following table.

| Outer Envelope Gas Fill Pressure | Filament Tube Gas Fill Pressure | Temp.> 0.1% failure rate | Temp. > 1% failure rate | Temp. > 10% failure rate |
|---|---|---|---|---|
| 600 torr | 4500 torr | 150°C | 170°C | 200°C |
| 600 torr | 2700 torr | 160°C | 190°C | 220°C |
| 250 torr | 4500 torr | 270°C | 290°C | 310°C |
| 250 torr | 2700 torr | 290°C | 310°C | 330°C |

The following table shows the percentage chance of non-containment for the different pressure combinations at increasing temperatures. Percentages less than 0.001% were rounded up to 0.001%

| Outer Envelope Gas Fill Pressure | Filament Tube Gas Fill Pressure | Percentage failure at given temperature | | | | |
|---|---|---|---|---|---|---|
| | | 150°C | 200°C | 250°C | 300°C | 350°C |
| 700 torr | 4500 torr | 0.018% | 14.4% | 93.8% | 99.9% | 99.9% |
| 700 torr | 2700 torr | 0.001% | 3.30% | 65.1% | 99.0% | 99.9% |
| 250 torr | 4500 torr | 0.001% | 0.001% | 0.001% | 4.15% | 94.7% |
| 250 torr | 2700 torr | 0.001% | 0.001% | 0.001% | 0.39% | 61.7% |

The combination of a 250 torr outer envelope gas fill pressure and 2700 torr filament tube gas fill pressure (250/2700) maintains low rates of non-containment at much higher temperatures than observed in a standard lamp with an outer envelope gas fill pressure of 600 torr and filament tube gas fill pressure of 4500 torr (600/4500). Whereas a standard 600/4500 lamp shows a 1% failure rate at 170°C, a 250/2700 lamp does not reach a 1% failure rate until the temperature is elevated to 310°C. In addition, the data show that most of the increased containment is due to reduction in the outer envelope gas fill pressure, with a lesser contribution from reduction in the filament tube gas fill pressure. In the practice of the invention, the pressures are preferably at least, or not more than, the pressures set forth in the Example. The results of the foregoing Example were surprising and unexpected.

For the sake of good order, various aspects of the invention are set out in the following clauses:-
1. A lamp (10) comprising a base (12) for connection to a source of electrical energy, a filament tube (14) comprising a filament (18) and a filament tube gas fill (20) at a pressure at about 20°C of at least about 900 torr, said filament (18) being electrically connected to the base (12), an outer envelope (22) attached to the base (12) and encompassing the filament tube (14), and an outer envelope gas fill (24) contained within the outer envelope (22) at a pressure at about 20°C of less than about 500 torr.
2. A lamp (10) according to clause 1, wherein the pressure of the filament tube gas fill (20) at about 20°C is less than about 4100 torr.
3. A lamp (10) according to clause 2, wherein the pressure of the outer envelope gas fill (24) at about 20°C is about 100 to 400 torr.
4. A lamp (10) according to clause 3, wherein the pressure of the filament tube gas fill (20) at about 20°C is about 1500 to 3900 torr.
5. A lamp (10) according to clause 2, wherein the pressure of the outer envelope gas fill (24) at about 20°C is about 200 to 300 torr.
6. A lamp (10) according to clause 5, wherein the pressure of the filament tube gas fill (20) at about 20°C is about 2300 to 3100 torr.
7. A lamp (10) according to clause 2, wherein the pressure of the outer envelope gas fill (24) at about 20°C is about 250 torr.
8. A lamp (10) according to clause 7, wherein the pressure of the filament tube gas fill (20) at about 20°C is about 2700 torr.
9. A lamp (10) according to clause 1 further comprising a coating substantially covering the outer surface of the outer envelope (22).
10. A lamp (10) according to clause 9 wherein the coating is a rubber coating.
11. A lamp (10) according to clause 10 wherein the rubber coating is a silicone rubber coating.
12. A lamp (10) according to clause 1 in which the outer envelope gas fill (24) comprises a gas selected from the group consisting of nitrogen, helium, neon, argon, krypton, and xenon.
13. A lamp (10) according to clause 1 in which the outer envelope (22) comprises a layer of glass about 0.4 to 0.6 millimeters thick.
14. A lamp (10) comprising a base (12) for connection to a source of electrical energy, a filament tube (14) comprising a filament (18) and a filament tube gas fill (20) at a pressure at about 20°C of less than about 4100 torr, said filament tube (14) being electrically connected to the base (12), an outer envelope (22) attached to the base (12) and encompassing the filament tube (14), and an outer envelope gas fill (24) contained within the outer envelope (22).
15. A lamp (10) according to clause 14 further comprising a coating substantially covering the outer surface of the outer envelope (22).
16. A lamp (10) according to clause 15 in which the coating is a rubber coating.
17. A lamp (10) according to clause 16 in which the rubber coating is a silicone rubber coating.
18. A lamp (10) according to clause 14 in which the filament tube gas fill (20) comprises about 90-99% of a gas selected from the group consisting of helium, neon, argon, krypton, and xenon, about 1-10% nitrogen, and about 0.05% of a halogen source.
19. A lamp (10) according to clause 14 in which the outer envelope (22) comprises a layer of glass about 0.4 to 0.6 millimeters thick.
20. A lamp (10) according to clause 14 in which the filament tube gas fill (20) pressure at about 20°C is about 1500 to 3900 torr.

## Claims

1. A lamp (10) comprising a base (12) for connection to a source of electrical energy, a filament tube (14) comprising a filament (18) and a filament tube gas fill (20) at a pressure at about 20°C of at least about 900 torr, said filament (18) being electrically connected to the base (12), an outer envelope (22) attached to the base (12) and encompassing the filament tube (14), and an outer envelope gas fill (24) contained within the outer envelope (22) at a pressure at about 20°C of less than about 500 torr.

2. A lamp (10) according to claim 1, wherein the pressure of the filament tube gas fill (20) at about 20°C is less than about 4100 torr.

3. A lamp (10) according to claim 1 or 2, wherein the pressure of the outer envelope gas fill (24) at about 20°C is about 100 to 400 torr.

4. A lamp (10) according to claim 1, 2 or 3, wherein the pressure of the filament tube gas fill (20) at about 20°C is about 1500 to 3900 torr.

5. A lamp (10) according to any preceding claim 2, wherein the pressure of the outer envelope gas fill (24) at about 20°C is about 200 to 300 torr.

6. A lamp (10) comprising a base (12) for connection to a source of electrical energy, a filament tube (14) comprising a filament (18) and a filament tube gas fill (20) at a pressure at about 20°C of less than about 4100 torr, said filament tube (14) being electrically connected to the base (12), an outer envelope (22) attached to the base (12) and encompassing the filament tube (14), and an outer envelope gas fill (24) contained within the outer envelope (22).

7. A lamp (10) according to claim 6 further comprising a coating substantially covering the outer surface of the outer envelope (22).

8. A lamp (10) according to claim 6 or 7 in which the coating is a rubber coating.

9. A lamp (10) according to claim 8 in which the rubber coating is a silicone rubber coating.

10. A lamp (10) according to any one of claims 6 to 9 in which the filament tube gas fill (20) comprises about 90-99% of a gas selected from the group consisting of helium, neon, argon, krypton, and xenon, about 1-10% nitrogen, and about 0.05% of a halogen source.
